**Europäisches Patentamt**

**European Patent Office**

**Office européen des brevets**

(19)

(11) Veröffentlichungsnummer: **0 077 344**
**B1**

(12) **EUROPÄISCHE PATENTSCHRIFT**

(45) Veröffentlichungstag der Patentschrift:
10.10.84

(51) Int. Cl.³: **B 23 K 11/36**

(21) Anmeldenummer: **82901110.5**

(22) Anmeldetag: **28.04.82**

(86) Internationale Anmeldenummer:
**PCT/CH 82/00061**

(87) Internationale Veröffentlichungsnummer:
**WO 82/03811 (11.11.82 Gazette 82/27)**

(54) **ELEKTRO-LÖT- ODER SCHWEISSELEKTRODENANORDNUNG SOWIE DEREN VERWENDUNG.**

(30) Priorität: **30.04.81 CH 2824/81**

(43) Veröffentlichungstag der Anmeldung:
**27.04.83 Patentblatt 83/17**

(45) Bekanntmachung des Hinweises auf die Patenterteilung:
**10.10.84 Patentblatt 84/41**

(84) Benannte Vertragsstaaten:
**AT BE CH DE FR GB LI LU NL SE**

(56) Entgegenhaltungen:
**DE - A - 2 437 641**
**US - A - 2 850 620**
**US - A - 3 235 704**

(73) Patentinhaber: **ROSSELL ELECTRONIQUE SA, Avenue de Provence 4, CH-1007 Lausanne (CH)**

(72) Erfinder: **ROSSELL, Jame, Avenue de Provence 4, CH-1007 Lausanne (CH)**

(74) Vertreter: **Troesch, Jacques J. et al, Walchestrasse 19, CH-8035 Zürich (CH)**

## Beschreibung

Die vorliegende Erfindung betrifft eine Elektro-Löt- oder -Schweißelektrodenanordnung zur Vornahme von entsprechenden Arbeiten an einem Werkstück entlang einer Kontur in einer Arbeitsebene mit mindestens einer Elektrode mit entsprechend der Kontur geformtem Arbeitsbereich, die um mindestens eine Achse parallel zur Arbeitsebene schwenkbar gelagert ist, sowie eine Verwendung der Anordnung für Mikro-Löt- oder -Schweißtechnik.

### Stand der Technik

Aus der US-PS 2 850 620 ist es bekannt, eine kreissektorförmige Elektrode um eine Achse parallel zur Arbeitsebene schwenkbar zu lagern, dies an einer Widerstandsschweißmaschine. Dabei wird die Elektrodenschwenkachse im Betrieb, parallel zur Arbeitsebene angetrieben, derart, daß der kreissektor-förmige Arbeitsbereich der Elektrode auf dem Werkstück abrollt.

Aus der DE-OS 2 437 641 ist weiter eine Vorrichtung zum Nahtschweißen bekannt, bei der eine wippenförmige Elektrode, getrieben durch randständige Antriebsorgane über dem Werkstück abgerollt wird.

Es ist nun weiter bekannt, konturförmige z. B. linienförmige Lötungen oder Schweißungen gleichzeitig mit entsprechend ausgebildeten Elektroden vorzunehmen, so beim Einlöten integrierter Schaltkreise in Mikroprint. Im Gegensatz zu punktförmigen Lötungen oder Schweißungen stellt sich dabei das Problem, daß die Elektroden nicht nur an einem Arbeitspunkt das Werkstück optimal berühren müssen, sondern daß dies entlang der vorgesehenen Kontur erreicht werden muß. Nun kann dies beispielsweise wegen nicht exakt gleich langer Kontaktbeine eines einzulötenden Schaltkreises nicht ohne weiteres sichergestellt sein, da die Elektroden entweder so zugeführt werden, daß sie ihre Arbeitsposition beim ersten mechanischen Kontakt mit dem Werkstück einnehmen, oder aber so lange zugeführt werden, bis eine halbwegs genügende Linienkontaktierung gewährleistet erscheint, was jedoch eine mechanische Beschädigung von Teilen des Werkstückes bedingen kann.

Dieses Problem wird nun durch die obenerwähnten, getrieben abrollenden Elektroden nicht gelöst.

### Darstellung der Erfindung

Die vorliegende Erfindung bezweckt, obengenannte Nachteile zu beheben. Dies wird bei einer Anordnung genannter Art dadurch erreicht, daß die Elektrode neben der Schwenkbewegung eine beliebige Verschiebebewegung zur Schwenkachse gegen eine Federrückstellkraft ausführen kann, zur optimalen Anschmiegung an das Werkstück.

Dadurch wird sichergestellt, daß sich die Lage der Elektrode entsprechend dem Werkstück selbtätig erstellen kann und somit eine der Kontur entsprechende Kontaktierung zwischen ihr und dem Werkstück ohne dessen mechanische Beeinträchtigung gewährleistet wird.

Dadurch, daß der Elektrodenarbeitsbereich linienförmig ausgebildet ist und die Elektrode um eine Achse senkrecht zur Arbeitsbereichs-Linie schwenkbar gelagert ist, ergibt sich die Möglichkeit, linienförmige Arbeiten optimal vorzunehmen, wie beispielsweise das Einlöten oder Einschweißen integrierter Schaltkreise mit parallelen Kontaktbein-Reihen.

Sollen nun derartige Arbeiten nicht entlang gerader Linien, sondern entlang gebogener Konturen vorgenommen werden, wie beispielsweise beim Einlöten oder Einschweißen von Schaltkreisen mit kreisförmig angeordneten Kontakten, so wird vorgeschlagen, den Elektroden-Arbeitsbereich mit in einer Ebene zweidimensionaler Arbeitsbereichs-Kontur auszubilden und die Elektrode um zwei Achsen schwenkbar zu lagern, vorzugsweise derart kardanisch und dabei die genannte Verschiebbarkeit bezüglich der Achsen beizubehalten.

Da nebst der vorgeschlagenen Schwenkbewegung sichergestellt werden muß, daß die Elektrode bezüglich ihrer Zubringvorrichtung sich auch linear bewegen kann, vorzugsweise federnd, um bei der Zubringung kontinuierlich den nötigen Auflagedruck sich einstellen zu lassen, wird vorgeschlagen, daß die Elektrode an einem Trägerteil mittels mindestens zweier Zapfen/Nutführungen mit wenigstens nahezu zur Achse parallelen Zapfen geführt ist, wobei vorzugsweise die Zapfen elastisch ausgebildet sind, zur Aufnahme der Verschiebebewegungen in den Nuten.

Damit wird erreicht, daß bei entsprechend gebogener Nutausbildung zur Aufnahme der Schwenkbewegung sich die Elektrode nach Maßgabe der Elastizität der Zapfen auch linear, d. h. vertikal zur Arbeitsebene verschieben kann, oder das bei linearer Ausbildung der Nuten nach Maßgabe der Zapfenelastizität auch eine Schwenkbewegung ausgeführt werden kann.

Eine einfache Fertigung der Elektroden ergibt sich dadurch, daß die Nuten wenigstens nahezu senkrecht zur Arbeitsebene linear ausgebildet werden, womit die Zapfen nach Maßgabe ihrer Elastizität die erwähnte Schwenkbewegung aufnehmen müssen, die Nuten jedoch, was in der Fertigung wesentlich einfacher ist, linear eingearbeitet werden können.

Ist das Werkstück derart uneben, daß auch durch die Elektroden-Neigung lediglich eine Mehrpunktkontaktierung erreicht wird, so wird vorgeschlagen, die Elektrode mit einem in mindestens einer Ebene senkrecht zur Arbeitsebene gewölbten Arbeitsbereich auszubilden, vorzugsweise kreissektor-förmig, wobei die Tangentennormalen mindestens eines wesentlichen Teils des Arbeitsbereiches die Achse nicht schneiden.

Dadurch wird erreicht, daß bei Zubringen der Elektrode diese federnd über dem Werkstück abrollt, wobei im Unterschiede zum Stande der Technik keine getriebene Abrollbewegung erfolgt, so daß Werkstück-Unebenheiten ohne mechanische Beeinträchtigung aufgenommen werden können.

Die freie Anschmiegbarkeit der Elektrode an das Werkstück wird weiter dadurch unterstützt, daß die Achse vorzugsweise verschieblich gelagert ist. Dieselben Vorteile werden auch dadurch erreicht, daß die Elektrode einen in mindestens einer Ebene senkrecht zur Arbeitsebene gewölbten Arbeitsbereich aufweist und daß die Tangentennormalen mindestens eines wesentlichen Teils des Arbeitsbereiches die Wirkungslinie einer Zustellkraft für die Elektrode schiefwinklig schneiden. Während im erstgenannten Fall die Kraftwirkungslinie durch die Achse laufen kann und die Ausbildung der Wölbung trotzdem ein federndes Schwenken der Elektrode zuläßt, indem die Tangentennormalen nicht durch die Schwenkachse laufen, können im zweiterwähnten Fall die Tangentennormalen durch die Schwenkachse laufen und die diesbezüglich exzentrisch gelegene Kraftwirkungslinie ermöglicht trotzdem das federnde Anschmiegen der Elektrode an den Arbeitsbereich.

Eine derartige Elektrodenanordnung eignet sich insbesondere für die Verwendung für Mikro-Löt- oder -Schweißtechnik.


Kurze Beschreibung der Zeichnungen

Die Erfindung wird anschließend beispielsweise anhand von Figuren erläutert. Es zeigt

Fig. 1 eine schematische Darstellung zweier bezüglich eines Werkstückes gegensinnig wirkender, linienförmiger Elektroden analog zu Punktschweißelektroden,

Fig. 2 eine schematische Anordnung von Spaltschweißelektroden für die Schwenkbewegung bewegungsgekoppelt,

Fig. 3 eine Darstellung analog zu Fig. 2 mit unabhängig voneinander schwenkbaren Elektroden einer Spalt-Schweißelektrodenanordnung,

Fig. 4 die schematische Anordnung einer gewinkelten Elektrode, um zwei Achsen schwenkbar gelagert,

Fig. 5 die schematische Darstellung einer Spaltschweißelektrodenanordnung, deren Elektroden gebogen sind und die um eine Achse unabhängig voneinander, um eine zweite gekoppelt, schwenkbar sind,

Fig. 6 die schematische Anordnung zweier Spaltschweißelektroden analog zu Fig. 5, die je um zwei Achsen unabhängig voneinander schwenkbar sind,

Fig. 7 eine perspektivische Darstellung einer Spaltschweißelektrodenanordnung mit linearer Arbeitskontur, unabhängig voneinander schwenkbar und unabhängig voneinander vertikal zum Arbeitsbereich verschieblich,

Fig. 8 eine Seitenansicht der Anordnung gemäß Fig. 7,

Fig. 9a eine schematische Darstellung einer Abroll-Elektrode,

Fig. 9b die schematische Darstellung der Druckwirkung als Abroll-Antrieb an einer Anordnung gemäß Fig. 9a.


Beschreibung der Einzelfiguren

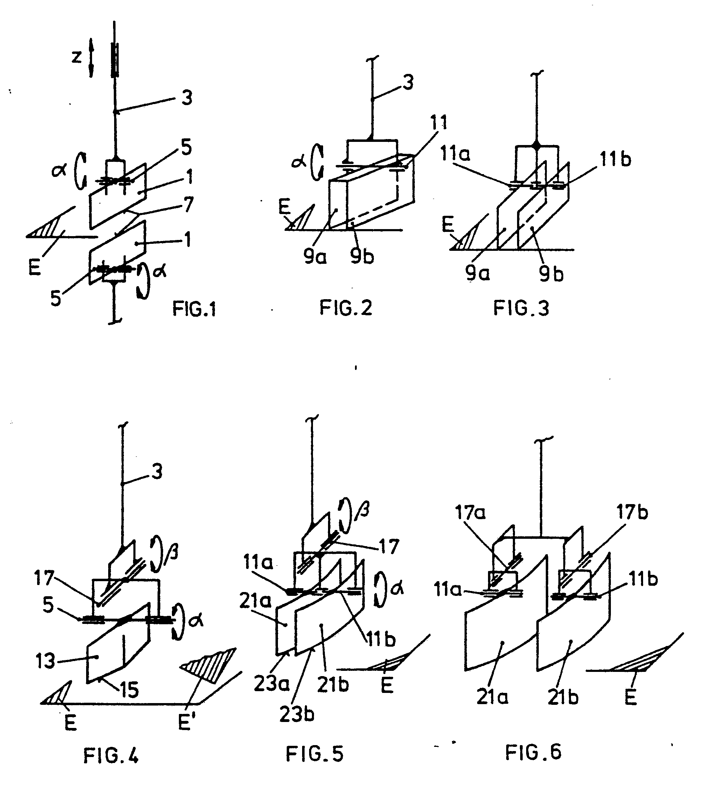

Gemäß Fig. 1 sind zwei plattenförmige Elektroden 1 relativ zueinander auf bekannte Art und Weise senkrecht, wie mit z bezeichnet, zu einer Arbeitsebene E, zum Werkstück in dieser Ebene E gelegen, zu- und rückholbar an einem Elektrodenzuführorgan 3 gelagert. Dabei sind beide Elektroden 1, die in Analogie zu Punktschweißelektroden beidseitig des Werkstückes zum Einsatz gebracht werden, je um eine Achse 5 parallel zur Arbeitsebene E, wie mit $\alpha$ bezeichnet, frei federnd schwenkbar gelagert. Dadurch wird sichergestellt, daß die beiden Arbeitsbereiche 7 der Elektroden 1 sich durch entsprechendes Aufschwenken um die Achsen 5 optimal an das Werkstück anschmiegen können.

In Fig. 2 ist ein Paar von Spaltschweißelektroden 9a und 9b dargestellt, die beide gemeinsam um eine Achse 11 parallel zur Arbeitsebene E frei federnd schwenkbar am Elektrodenzuführorgan 3 gelagert sind. Auch hier können die beiden Elektroden 9a und 9b bewegungsgekoppelt um die Achse 11, wie mit $\alpha$ eingetragen, auf- oder abgeneigt werden, und sich der Werkstückebene, die nicht exakt in der Arbeitsebene E zu liegen braucht, anpassen.

Gemäß Fig. 3 sind die beiden Spaltschweißelektroden 9a und 9b je getrennt um eine Achse 11a resp. 11b bezüglich der Arbeitsebene E frei federnd schwenkbar.

In Fig. 4 ist eine Elektrode 13, beispielsweise für eine Anordnung mit bezüglich des Werkstückes beidseitig wirkenden Elektroden gemäß Fig. 1 dargestellt, die einen gewinkelten Arbeitsbereich 15, entsprechend einer entlang einer Winkelkontur auszuführenden Arbeit aufweist. Da ein in der Arbeitsebene E liegendes Werkstück eine zu bearbeitende Kontur entsprechend derjenigen des Arbeitsbereiches 15 aufweisen kann, die jedoch in einer allgemein zur Arbeitsebene E schiefliegenden Ebene E' liegen kann, ist die Elektrode 13 nebst federnd frei schwenkbar um eine erste Achse 5 entsprechend $\alpha$ zusätzlich um eine ebenfalls parallel zur Arbeitsebene E senkrecht zur Achse 5 liegende zweite Achse 17, entsprechend $\beta$ federnd frei schwenkbar am Elektrodenträger 3 gelagert. Damit kann sich nun die Elektrode 13 mit ihrem Arbeitsbereich 15 wiederum optimal an die zu bearbeitende Kontur des Werkstückes, beispielsweise in der Ebene E' liegend, anschmiegen.

In Fig. 5 ist eine Anordnung analog zu derjenigen von Fig. 4 dargestellt, für Spaltschweißelektroden 21a und 21b. Analog zu Fig. 3 sind diese Spaltschweißelektroden für Arbeiten entlang einer gebogenen Kontur mit entsprechend gebogenen Arbeitsbereichen 23a und 23b ausgebildet, und unabhängig voneinander um Achsen 11a resp. 11b zudem gemeinsam um eine zweite Achse 17 federnd frei schwenkbar gelagert. Dabei versteht sich von selbst, daß auch bezüglich der Schwenkung um $\alpha$, d. h. um die Achsen 11a resp. 11b, die beiden Spaltschweißelektroden 21a und 21b gekoppelt, um eine gemeinsame Achse analog zur Achse 11 von Fig. 2 federnd frei schwenkbar gelagert sein können.

In Fig. 6 sind die beiden Spaltschweißelektroden 21a und 21b unabhängig voneinander je um eine erste Achse 11a resp. 11b frei federnd schwenkbar gelagert und je, wiederum unabhängig, um eine zweite Achse 17a resp. 17b.

Die für die frei federnde Lagerung vorgesehenen Filterorgane sind aus Einfachheitsgründen in den Fig. 1—6 nicht dargestellt. Es kann sich dabei um vorgesehene Spiralfedern oder eine entsprechende Anordnung linearer Federorgane handeln. Eine solche Anordnung wird nur im Detail beschrieben.

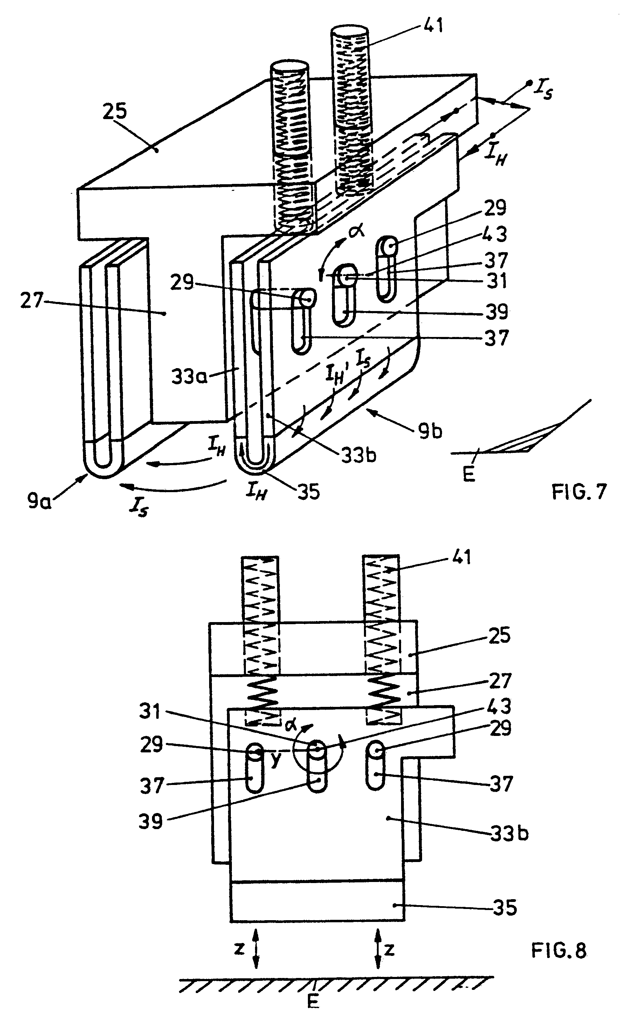

In Fig. 7 ist eine mögliche Realisation der grundsätzlich in Fig. 3 dargestellten Elektrodenanordnung dargestellt. Ihre Seitenansicht zeigt Fig. 8. Ein T-förmig ausgebildeter Elektrodenträgerteil 25 trägt beidseitig entlang seines T-Mittelstückes 27 drei parallel vorragende Zapfen 29 resp. 31. Die Spaltschweißelektroden umfassen je ein Paar parallel angeordneter Stromführplatten 33a und 33b, die im Arbeitsbereich mit einer Partie 35 U-förmig miteinander verbunden sind. Anschlüsse für Heizstrom sind, wie mit $I_H$ schematisch dargestellt, beidseitig an jeder der Platten 33a und 33b angeordnet, so daß durch das Basisstück eine gleichmäßige Stromverteilung sichergestellt ist. Für den Schweißstrom $I_S$ werden beide Anschlüsse entsprechend $I_H$ beider Elektroden auf gleiches Potential gelegt, so daß sich auch hier, wie mit $I_S$ angedeutet, eine gleichmäßige Stromverteilung von einer Elektrode über das Werkstück zur anderen ergibt.

Die Führungszapfen 29 resp. 31 gleiten an jeder Elektrodenplatte in Nuten 37 resp. 39. Zwischen dem Elektrodenträgerteil 25 und jeder der beiden Elektroden 9a, b sind Federn 41 vorgesehen, welche die Elektroden mit ihren Nuten 37 resp. 39 in die unterste Position bezüglich der Zapfen 29 resp. 31 drücken.

Wie in Fig. 8 mit z dargestellt, erlaubt diese Anordnung, daß beide Elektroden 9a, 9b unabhängig voneinander linear bezüglich einer Arbeitsebene E vertikal auf- und abbewegt werden. Dadurch wird sichergestellt, daß bei Zustellung des Elektrodenträgerteils 25 an das Werkstück und nach Kontaktierung des Werkstückes sich der notwendige Kontaktdruck gegen die Kraft der Federn 41 einstellen kann.

Um nun zusätzlich entsprechend $\alpha$ um die Achse 43 des Mittelzapfens 31 schwenkbar zu sein, und um dazu nicht gebogene Nuten 37 vorsehen zu müssen, sind mindestens die beiden seitlich angeordneten Zapfen 29 elastisch ausgebildet, vorzugsweise aus einem hitzebeständigen Kunststoff. Damit wird sichergestellt, daß auch Schwenkbewegungen entsprechend $\alpha$ durch Ausbiegen der Zapfen 29 aufgenommen werden können. Auch diese Schwenkbewegung $\alpha$ erfolgt gegen die Wirkung der Federn 41. Es versteht sich von selbst, daß die Nuten 37 entsprechend dem Radius r zur Aufnahme der Schwenkbewegungen um die Achse 43 gebogen ausgebildet werden können, womit dann die elastischen Zapfen 29 mit ihrer Elastizität die linearen Bewegungen entsprechend z aufnehmen.

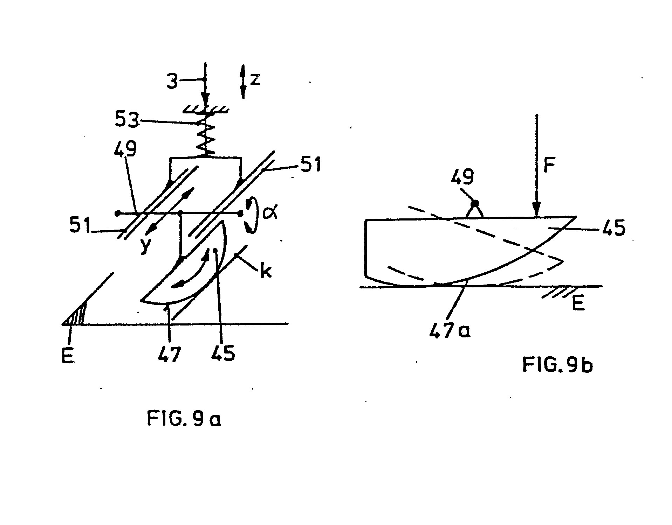

In den Fig. 9a, 9b ist eine weitere Ausführungsvariante der Elektrodenanordnung dargestellt, aus Einfachheitsgründen mit einer einzigen Elektrode, wobei auch diese Ausführungsvariante für Spaltschweißelektroden mit gekoppelter oder unabhängiger Beweglichkeit realisiert werden kann. Da trotz der Neigbarkeit von Elektroden gemäß Fig. 1—6 dann eine saubere Kontaktierung entlang der ganzen zu bearbeitenden Kontur nicht sichergestellt werden kann, wenn letztere am Werkstück nicht eben ist, sondern von Exemplar zu Exemplar unterschiedlich uneben, wird gemäß Fig. 9a und 9b vorgeschlagen, die Elektroden als frei federnd schwenkbare Elektroden mit gewölbtem Arbeitsbereich auszubilden.

Gemäß Fig. 9a umfaßt eine Elektrode 45 einen in einer Ebene senkrecht zur Arbeitsebene E gewölbten Arbeitsbereichkontur 47. Die Elektrode 45 ist um die Achse 49 analog zu den bisherigen Ausführungen entsprechend $\alpha$ frei federnd schwenkbar gelagert, wobei nun diese Achse 49 in Führungen 51 auch translatorisch vorzugsweise parallel zur Ebene E verschieblich sein kann, wie mit y angedeutet. Damit kann entweder durch Verschiebung des Werkstückes in der Ebene E, wobei dann die Achse 49 translatorisch nicht verschieblich ausgebildet zu sein braucht, oder aber durch Verschieben der Achse 49 in ihren Führungen 51 und damit bewirkter Abrollbewegung des Bereichs 47 entlang der zu bearbeitenden Kontur k eine optimale Kontaktierung sichergestellt werden. Da die Elektrodenzustellung, wie schematisch mit der Feder 53 dargestellt, ohnehin federnd erfolgt, werden unebenheitsbedingte Verschiebungen der Elektrode 45 in Richtung z dadurch frei federnd aufgenommen.

Wesentlich an der erfindungsgemäßen Elektrodenanordnung ist es, daß sich die Elektrode frei federnd an das Werkstück anpassen kann. Dies erfolgt grundsätzlich dadurch, daß bei freifedernder, schwenkbarer Lagerung die Tangentennormalen des gewölbten Arbeitsbereiches die Schwenkachse schneiden, jedoch die Kraftwirkungslinie der Zustellkraft schiefwinklig schneiden oder daß die genannten Tangentennormalen die Schwenkachse nicht schneiden.

Gemäß Fig. 9b ist die Elektrodenwölbung 47a bezüglich der Wirkungslinie einer Elektrodenzustellkraft exzentrisch angeordnet, so daß bei frei federnder Lagerung der Elektrode 45 um die Achse 49 auch hier ein freies Anschmiegen durch Abrollen auf dem Werkstück sichergestellt ist.

Auch an der Anordnung gemäß den Fig. 9a und 9b sind die vorgesehenen Federorgane, die das frei federnde Schwenken der Elektrode 45 um die Achse 49 ermöglichen, beispielsweise Spiralfedern, nicht dargestellt.

Mit der vorgeschlagenen Elektrodenanordnung, bei welcher die Elektrodenlage sich frei nach der Ausbildung des Werkstückes einstellt, wird es möglich auch komplizierte Konturen präzise und unter Gewährleistung einer optimalen Anschmiegung zwischen Elektrode und Werkstück zu bearbeiten.

**Patentansprüche**

1. Elektro-Löt- oder -Schweißelektrodenanordnung zur Vornahme von entsprechenden Arbeiten an einem Werkstück, entlang einer Kontur in einer Arbeitsebene (E), mit mindestens einer Elektrode (1, 9, 13, 23) mit entsprechend der Kontur geformtem Arbeitsbereich (7, 15, 25), die um mindestens eine Achse (5, 11, 17, 45) parallel zur Arbeitsebene (E) schwenkbar gelagert ist, dadurch gekennzeichnet, daß die Elektrode neben der Schwenkbewegung eine beliebige Verschiebebewegung zur Schwenkachse gegen eine Federrückstellkraft ausführen kann, zur optimalen Anschmiegung an das Werkstück.

2. Anordnung nach Anspruch 1, dadurch gekennzeichnet, daß der Elektroden-Arbeitsbereich linienförmig (7, 37) ausgebildet ist und die Elektrode um eine Achse (5, 11, 45) senkrecht zur Arbeitsbereichs-Linie schwenkbar gelagert ist.

3. Anordnung nach Anspruch 1, dadurch gekennzeichnet, daß der Elektroden-Arbeitsbereich eine in einer Ebene zweidimensionale Arbeitsbereichs-Kontur aufweist (15, 25) und die Elektrode (13, 23) um zwei Achsen (5/17, 11/17) schwenkbar gelagert ist, und die Verschiebebewegung ausführen kann.

4. Anordnung nach Anspruch 1, dadurch gekennzeichnet, daß die Elektrode kardanisch gelagert ist.

5. Anordnung nach Anspruch 2, dadurch gekennzeichnet, daß die Elektrode an einem Trägerteil (27) mittels mindestens zwei Zapfen/Nutführungen (31, 39) mit wenigstens nahezu zur Achse parallelen Zapfen geführt ist.

6. Anordnung nach Anspruch 5, dadurch gekennzeichnet, daß die Zapfen (29) elastisch ausgebildet sind, und vorzugsweise die Nuten linear, senkrecht zur Arbeitsebene (E).

7. Anordnung nach Anspruch 1, dadurch gekennzeichnet, daß die Elektrode einen in mindestens einer Ebene senkrecht zur Arbeitsebene gewölbten Arbeitsbereich, vorzugsweise kreissektor-förmig, aufweist, wobei die Tangentennormalen mindestens eines wesentlichen Teils des Arbeitsbereiches die Achse (49) nicht schneiden.

8. Anordnung nach Anspruch 7, dadurch gekennzeichnet, daß die Achse (49) verschieblich gelagert ist.

9. Anordnung nach Anspruch 1, dadurch gekennzeichnet, daß die Elektrode einen in mindestens einer Ebene senkrecht zur Arbeitsebene gewölbten Arbeitsbereich aufweist, vorzugsweise kreissektor-förmig, und daß die Tangentennormalen mindestens eines wesentlichen Teils des Arbeitsbereiches die Wirkungslinie einer Zustellkraft für die Elektrode schiefwinklig schneiden.

10. Verwendung der Anordnung nach einem oder mehreren der Ansprüche 1 bis 9 für Mikro-Löt- oder -Schweißtechnik.

**Claims**

1. Electric soldering or welding electrode arrangement for carrying out corresponding work on a workpiece, along a contour in a working plane (E), having at least one electrode (1, 9, 13, 23) with a working field (7, 15, 25) of shape corresponding to the contour, the electrode being mounted to pivot about at least one axis (5, 11, 17, 45) parallel to the working plane (E), characterised in that the electrode can, in addition to the pivoting motion, execute any desired translational motion relative to the pivot axis, against a spring return force, for optimum hugging of the workpiece.

2. Arrangement according to claim 1, characterised in that the electrode working field is linear (7, 37) and the electrode is mounted to pivot about an axis (5, 11, 45) at right angles to the working field line.

3. Arrangement according to claim 1, characterised in that the electrode working field has a working field contour (15, 25) which is two-dimensional in one plane, and the electrode (13, 23) is mounted to pivot about two axes (5/17, 11/17) and can execute the translational motion.

4. Arrangement according to claim, characterised in that the electrode is mounted on gimbals.

5. Arrangement according to claim 2, characterised in that the electrode is guided on a support (27) by means of at least two stud/slot guides (31, 39) with studs which are at least approximately parallel to the axis.

6. Arrangement according to claim 5, characterised in that the studs (29) are of elastic construction and the grooves are preferably linear and at right angles to the working plane (E).

7. Arrangement according to claim 1, characterised in that the electrode has a working field, preferably in the shape of a sector of a circle, which is domed in at least one plane at right angles to the working plane, with the normals to the tangents of at least a substantial part of the working field not intersecting the axis (49).

8. Arrangement according to claim 7, characterised in that the axis (49) is mounted to be translationally movable.

9. Arrangement according to claim 1, characterised in that the electrode has a working field, preferably in the shape of a sector of a circle, which is domed in at least one plane at right angles to the working plane, and that the normals to the tangents of at least a substantial part of the working field intersect at an oblique angle the line of action of a force with which the electrode is applied to the workpiece.

10. Use of the arrangement according to one or more of claims 1 to 9 in micro-soldering or micro-welding technology.

## Revendications

1. Dispositif à électrodes pour la soudage ou le brasage électrique destiné à exécuter de telles opérations sur une pièce, le long d'un certain contour dans un plan de travail (E) et comprenant au moins une électrode (1, 9, 13, 23) pourvue d'une zone active (7, 15, 25) conformée selon le contour et qui est montée à pivotement autour d'au moins un axe (5, 11, 17, 45) parallèle au plan de travail, caractérisé en ce que l'électrode peut effectuer, en plus du mouvement de pivotement, un mouvement quelconque de coulissement par rapport à l'axe de pivotement, à l'encontre d'une force de rappel élastique, pour qu'elle épouse de façon optimale la forme de la pièce.

2. Dispositif selon la revendication 1, caractérisé en ce que la zone active de l'électrode se présente sous la forme d'une ligne (7, 37) et l'électrode est montée à pivotement autour d'un axe (5, 11, 45) perpendiculaire à la ligne constituant la zone active.

3. Dispositif selon la revendication 1, caractérisé en ce que la zone active de l'électrode présente un profil de travail bidimentionnel (15, 25) s'étendant dans un plan et l'électrode (13, 23) est montée à pivotement autour de deux axes (5/17, 11/17) et peut effectuer le mouvement de coulissement.

4. Dispositif selon la revendication 1, caractérisé en ce que l'électrode est portée par un cardan.

5. Dispositif selon la revendication 5, caractérisé en ce que l'électrode est guidée sur un élément de support (27) au moyen d'au moins deux ensembles goujon/lumière de guidage (31, 39) avec des goujons au moins approximativement parallèles à l'axe.

6. Dispositif selon la revendication 5, caractérisé en ce que les goujons (29) sont prévus élastiques et les lumières sont de préférence rectilignes et perpendiculaires au plan de travail (E).

7. Dispositif selon la revendication 1, caractérisé en ce que l'électrode présente une zone active cintrée, de préférence en forme de secteur circulaire, dans au moins un plan perpendiculaire au plan de travail, les normales aux tangentes d'au moins une partie essentielle de la zone active, ne coupant pas l'axe (49).

8. Dispositif selon la revendication 7, caractérisé en ce que l'axe (49) est monté coulissant.

9. Dispositif selon la revendication 1, caractérisé en ce que l'électrode présente une zone active cintrée, de préférence en forme de secteur circulaire, dans au moins un plan perpendiculaire au plan de travail, et en ce que les normales aux tangentes d'au moins une partie essentielle de la zone active coupent à angle oblique la ligne d'action d'une force d'obstruction pour l'électrode.

10. Utilisation du dispositif selon une ou plusieurs des revendications 1 à 9, pour la technique de micro-brasage ou micro-soudage.

FIG.1

FIG.2

FIG.3

FIG.4

FIG.5

FIG.6

FIG. 7

FIG.8

FIG. 9 a

FIG. 9 b